Europäisches Patentamt

European Patent Office

Office européen des brevets

(11) Publication number: **0 376 461 A2**

# EUROPEAN PATENT APPLICATION

(21) Application number: **89311937.0**

(22) Date of filing: **17.11.89**

(51) Int. Cl.⁵: **C09J 123/08, C08K 3/36**

(30) Priority: **17.12.88 GB 8829524**

(43) Date of publication of application:
**04.07.90 Bulletin 90/27**

(84) Designated Contracting States:
**DE FR GB**

(71) Applicant: **BOSTIK LIMITED**
**Ulverscroft Works Ulverscroft Road**
**Leicester LE4 6BW(GB)**

Applicant: **EMHART S.A.**
**12 rue Truillot B.P. 202**
**F-94203 Ivry-sur-Seine Cédex(FR)**

Applicant: **BOSTIK-TUCKER GmbH**
**Gattenhöferweg 36**
**D-6370 Oberursel/Taunus(DE)**

(72) Inventor: **Gilch, Heinz Gerhard**
**Holderlinweg 17A**
**D-6380 Bad Homburg(DE)**
Inventor: **von Voithenberg, Hubertus**
**Kaiser-Friedrich-Promenade 76**
**D-6380 Bad Homburg(DE)**
Inventor: **Schüll, Volker**
**Prischoss Strasse 26**
**D-8755 Alzenau/Ufr.(DE)**

(74) Representative: **Wetters, Basil David Peter et al**
**Emhart Patents Department Lyn House 39**
**The Parade**
**Oadby, Leicester LE2 5BB(GB)**

(54) **Hot-melt glue-sticks.**

(57) Hot-melt adhesive or sealant glue-sticks for use in hot-melt guns comprising an ethylene vinyl acetate copolymer including 1-15wt%, preferably 5-8wt%, of fumed silica. The compositions of the glue-sticks are produced by direct dispersion of the fumed silica in the EVA melt. Glue-sticks made of the compositions are significantly less prone to stringing and provide a sag-resistant melt.

## HOT-MELT GLUE-STICKS

The present invention relates to adhesives and sealants comprising ethylene vinylacetate (EVA) copolymers provided in rod form which can be melted to provide a hot-melt liquid of high structural viscosity. Such products are generally known as glue-sticks.

Hot-melt glue-sticks are well known and are used in hot-melt applicators, often called glue-guns. The glue-sticks are melted in the glue-guns and the hot-melt applied in small beads or thin layers. One significant drawback of hot-melt glue-sticks hitherto known occurs when stopping the application of a bead or spot of molten hot-melt onto a workpiece by means of a glue-gun. In this case, a thread of hot-melt material often develops, reaching from the bead or spot to the nozzle of the glue-gun and when this breaks uncontrolled spilling of the hot-melt glue over the workpiece results. This effect is often known as "stringing".

Problems can also arise with known glue-sticks when applying larger beads or thicker layers or when gap-filling, particularly with vertical applications, when the melt will run out or spread uncontrollably before solidification takes place.

It is accordingly an object of the present invention to provide hot-melt EVA glue-sticks with significantly reduced stringing when applied by means of a glue-gun.

It is a further object of the present invention to provide EVA hot-melt glue-sticks with an improved sag-resistance or high structural viscosity, that is, with a high viscosity at a low shear rate and low viscosity at a high shear rate.

German OLS 2 013 158 discloses an EVA melt adhesive tape which is given improved heat resistance by incorporation of a mixture of inactive silica and high-activity fumed silica. However, such materials are not applicable as hot-melt glue-sticks, since due to the high overall silica content of about 50% they do not have the melt viscosities and melt flow characteristics required for the application by a glue-gun.

Further, it has been proposed to incorporate thixotropic additives in hot-melt materials and European patent No. 0 244 608 discloses the use of thixotropic materials at a level of 5-30 wt%, preferably 8-20 wt%. However, the hot-melts disclosed in EPS 0 244 608 are reactive materials based on polyurethanes. These are not suitable for hot-melt glue-sticks due to their curing reaction with atmospheric moisture.

According to the present invention we provide a hot-melt glue stick with improved stringing behaviour comprising at least one ethylene vinyl acetate copolymer characterised in that the composition includes 1-15wt%, preferably 5-8wt%, of fumed silica. Particularly useful glue-sticks can be formed from an EVA composition including 5.5-6wt% of fumed silica. Such glue-sticks may be used as adhesives or sealants when applied by glue-gun.

Many commercial polymers are used to formulate hot-melt adhesives, including nylon, polyesters, amorphous polypropylene, butylene copolymers as well as ethyl vinyl acetate copolymers. These polymers are formulated with other resins, softeners, stabilizers etc and there have been proposals to include thixotropic materials. However, we have found that the use of fumed silica with ethylene vinyl acetate copolymers (EVA) is surprisingly effective in producing glue-sticks with significantly reduced stringing and low sagging. The effective use of fumed silica in products manufactured and/or applied at temperatures higher than 150° C would not have been predicted.

The hot-melt glue-sticks according to the present invention can be produced from EVA mixtures prepared by mixing the components in an apparatus which allows incorporation of the fumed silica directly into the overall mixture. Such apparatuses are well known.

As is normal with such materials, the properties can be varied by selection of components and it is found that optimum properties regarding stringing sag-resistance and extrudability can be achieved by combining, say, two types of EVA.

In order that the present invention be better understood, preferred embodiments will now be described in greater detail by way of example.

The effect of incorporating fumed silica in EVA compositions is demonstrated by Table 1:

## TABLE 1

| Ingredients (in parts by weight) | Examples | | | | | Comparative Example |
|---|---|---|---|---|---|---|
| | 1 | 2 | 3 | 4 | 5 | 6 |
| Elvax (RTM) 210 | 240 | 240 | 240 | 240 | 240 | 240 |
| Elvax (RTM) 150 | 40 | 40 | 40 | 180 | 50 | 180 |
| Piccotex (RTM) LC | 120 | 120 | 120 | 180 | 50 | 180 |
| Stabilizer (phenalic anti oxidant) | 0.5 | 0.5 | 0.4 | - | 1.2 | - |
| Fumed Silica | 30 | 25 | 40 | 54 | 33 | - |
| Santicizer (RTM) 409A | - | - | - | 60 | - | - |
| Sag Resistant | yes | yes | yes | yes | yes | no |
| Extrusion Rate | low | high | very low | high | high | high |

The proprietary ingredients used in these Examples are identified as follows:

ELVAX is an ethylene vinyl acetate copolymer and grade 210 has a EVA of 28 and a Melt Index (ASTM D 1238) of 365-440 and grade 150 has a EVA of 33 and a Melt Index of 38-48.

PICCOTEX LC is an aromatic hydrocarbon resin and SANTICIZER 409A is a polyadipate plasticiser.

SAG RESISTANCE is evaluated simply by applying a bead of molten adhesive to a vertical surface. Non-sag-resistance compositions tend to flow whereas sag-resistance ones do not.

Extrusion Rate was compared by heating glue-sticks in a Bostik TG4 glue-gun and measuring the quantity of melt extruded in $\frac{1}{2}$ minute.

The compositions were prepared by direct addition of the fumed silica to a mix of the other ingredients. EVA pellets, additives and stabiliser were heated with stirring to 180°C until the batch was homogeneous. The fumed silica was then added directly to the mix and kneading (stirring) continued at 200°C for about one hour.

Stringing behaviour has been tested by comparing the glue-stick of Example 2 (Table 1) with the comparative Example 6.

The test procedure was to apply several times a small bead of hot-melt glue onto release paper by means of a Bostik TG3 glue-gun, stopping the hot-melt flow and horizontal movement of the glue-gun. After each application stopped, the length of the emerging thread was measured. The minimum and maximum thread length for each composition is given in Table 2. The speed effect was found to be relatively low.

## TABLE 2

| | Thread Length | |
|---|---|---|
| | Minimum | Maximum |
| Example 2 | 5 cm | 10 cm |
| Comparative Example | 100 cm | 200 cm |

The effect of fumed silica on EVA hot-melts was further demonstrated by comparing melt viscosity and shear rate of the composition of Example 2 with the composition of the comparative example. These results are shown in TABLE 3.

## TABLE 3

| Melt Viscosity (Pa.s) v. Shear Rate (s$^{-1}$) | | | | | | | | |
|---|---|---|---|---|---|---|---|---|
| Example 2: | 280 | 137 | 82.3 | 51.8 | 30.6 | 22.1 | 16.6 | 11.9 |
| Comparative Example | - | 32.2 | 18.6 | 16.0 | 13.2 | 13.7 | 12.0 | 10.1 |
| Shear Rate | 5.6 | 14 | 28 | 56 | 140 | 280 | 560 | 1100 |

At low shear rates, Example 2 shows high viscosity, i.e. the product does not sag. At higher shear rates, viscosity is low, i.e. the product can be easily spread. All measurements were made at 200°C.

**Claims**

1. A hot-melt glue-stick with improved stringing behaviour comprising at least one ethylene vinyl acetate copolymer characterised in that the composition includes 1-15wt%, preferably 5-8wt%, of fumed silica.

2. A hot-melt glue-stick according to claim 1, wherein the composition includes 5.5-6.0wt% of fumed silica.

3. A hot-melt glue-stick according to claim 1 or 2, wherein the composition comprises two ethylene vinyl acetate copolymers of different Melt Index.

4. A hot-melt glue-stick according to any one of the preceding claims which provide a sag-resistant melt when extruded as a melt from a hot-melt gun.